# EUROPÄISCHE PATENTSCHRIFT

(11) **EP 1 857 687 B1**
(45) Veröffentlichungstag und Bekanntmachung des Hinweises auf die Patenterteilung: **23.12.2009**
(21) Anmeldenummer: 07006000.9
(22) Anmeldetag: 23.03.2007
(51) Int. Cl.: F16B 2/14, F16B 7/18, F16B 9/02

(54) **Drehfeste lösbare mechanische Verbindung zwischen einem Funktionsteil und einem Anschlussteil**
Torque proof releasable mechanical connection between a functional part and a connecting part
Connexion mécanique amovible bloquée en rotation entre un module fonctionnel et une pièce de connexion

(30) Priorität: 28.04.2006 DE 202006007040 U
(43) Veröffentlichungstag der Anmeldung: 21.11.2007
(73) Patentinhaber: Richter, Harald, 75331 Engelsbrand (DE)
(72) Erfinder: Richter, Harald, 75331 Engelsbrand (DE)
(74) Vertreter: Gallo, Wolfgang

(56) Entgegenhaltungen:
- WO-A-83/03450
- DE-U1-202004 017 034
- GB-A- 833 802
- US-A- 3 721 463

## Beschreibung

Die Erfindung betrifft eine drehfeste lösbare mechanische Verbindung zwischen einem Funktionsteil und einem Anschlussteil. Dabei kann das Funktionsteil beispielsweise ein Sockel, insbesondere ein Saugfußsockel, und das Anschlussteil eine Tragarmkomponente, beispielsweise ein Schwanenhals sein.

Solche Verbindungen sind zum Beispiel aus den GB 833802 und DE 20 2004 017034 U bekannt. Insbesondere entspricht die GB 833802 den Merkmalen des Oberbegriffs des Anspruchs 1.

Eine Anwendungsmöglichkeit der Erfindung ist die Konstruktion variabler Halterungen für Navigationsgeräte, Kleincomputer oder Mobiltelefone in Kraftfahrzeugen mittels Saughaltersockeln oder fest montierten Sockeln irgendwo im Fahrzeug mit austauschbarem Schwanenhals oder sonstigem Tragarm, was die wahlweise Verwendung längerer oder kürzerer Tragarme oder die Verwendung austauschbarer Halterungskomponenten ermöglicht.

Geräteträger mit Saugfußsockel oder anderweitig montiertem, beispielsweise an einer Befestigungsfläche angeklebten oder angeschraubten Sockel, mit Schwanenhals-Tragarmen sind in vielfältiger Form bekannt. Alle diese bekannten Geräteträger haben gemeinsam, daß der Schwanenhals fest mit dem Befestigungssockel verbunden ist. Wichtig ist dabei, daß eine drehfeste Verbindung zwischen Sockel und Schwanenhals erfolgt, da im Gebrauch erhebliche Kräfte, insbesondere auch Torsionskräfte, auftreten, weil für die notwendige starre Halterung des betreffenden Geräts der Schwanenhals eine sehr hohe Steifigkeit haben muß, aber sich gerade noch von Hand biegen lassen muß. Ein solcher Schwanenhals hat einen Kern aus Metalldraht, der üblicherweise am Anschlußende profiliert ist, beispielsweise abgeflacht, oder der insgesamt eine polygone Form hat, und der in eine Aufnahmehülse des Befestigungssockels eingreift und dort formschlüssig sitzt und verklebt ist.

Da schon die herkömmliche, nicht lösbare Verbindung zwischen einem Schwanenhals und einem Befestigungssockel nicht unproblematisch ist, dort aber das Problem in wesentlichem Maße durch eine stabile Verklebung zusätzlich zu einer Formschlussverbindung gelöst werden kann, ist es, wenn eine lösbare Verbindung zwischen einem Anschlussteil, insbesondere einem Schwanenhals, und einem Funktionsteil wie beispielsweise einem Befestigungssockel, vorgesehen werden soll, besonders problematisch, eine brauchbare und den im Gebrauch mutmaßlich auftretenden Torsionskräften stand haltende Verbindung herzustellen.

Aufgabe der Erfindung ist es daher, eine Konstruktion zu schaffen, die eine solche lösbare, aber drehfeste Verbindung ermöglicht.

Diese Aufgabe wird gemäß der Erfindung durch die im Anspruch 1 angegebene Anordnung gelöst.

Vorteilhafte Ausgestaltungen der Erfindung sind Gegenstand der Unteransprüche.

Kernelement der erfindungsgemäßen Konstruktion ist das Vorsehen eines nachgiebigen keilförmigen Zwischenstücks zwischen einem profilierten Element des Anschlussteils und einer komplementär profilierten Aufnahmeöffnung des Funktionsteils, wobei miteinander zusammenwirkende Flächen zur Einsteckachse geneigt sind, um eine relative Verspannung durch axiales Zusammenspannen zu ermöglichen.

Ein Ausführungsbeispiel der Erfindung, und zwar am Beispiel einer lösbaren drehfesten Verbindung zwischen einem Schwanenhals und einem Saugbefestigungssockel (eine gleichartige Verbindung ist zwischen dem Schwanenhals und einer Montageplatte oder einem Gerätehalter möglich) wird nachstehend unter Bezugnahme auf die anliegenden Zeichnungen mehr im einzelnen beschrieben, in denen zeigt:
- Fig. 1: in perspektivischer Darstellung das Endstück eines Schwanenhalses und einen Saugfußsockel,
- Fig. 2: eine Seitenansicht der Anordnung nach Fig. 1,
- Fig. 3: eine auseinandergezogene Schnittdarstellung der Anordnung nach den Fig. 1 und 2, und
- die Fig. 4a und 4b: Darstellungen zwei verschiedener Ausführungsformen des Kerndrahts eines Schwanenhalses mit einem Klemmkeilzwischenstück.

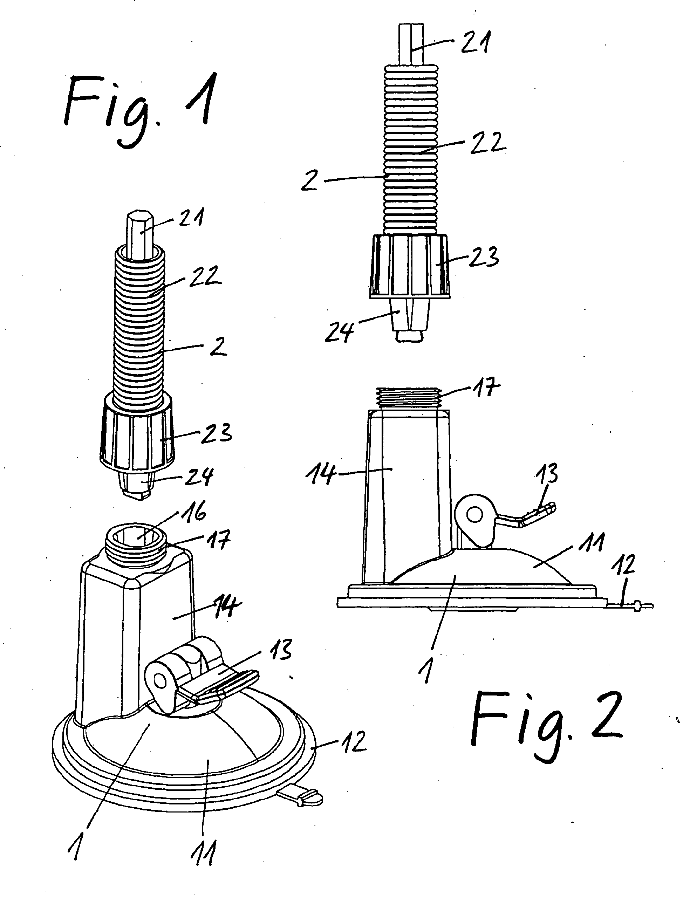

Die Figuren 1 und 2 zeigen in perspektivischer bzw. in Seitenansicht einen Saugfußsockel 1 und das Endstück eines Schwanenhalses 2.

Der Saugfußsockel 1 weist einen Saugfuß 11 mit am Rand überstehender Saugmembran 12 und einem Betätigungshebel 13 sowie eine Sockelsäule 14 mit einer Aufnahmehülse 16 auf, die ein Außengewinde 17 trägt. Die Aufnahmhülse ist innenseitig mit einem konischen Polygonprofil ausgebildet.

Der Schwanenhals 2 besteht aus einem Kerndraht 21, der beim Ausführungsbeispiel nach den Figuren 1 und 2 als Sechskantdraht ausgebildet ist, und einem Mantel 22 in Gestalt eines Kunststoffwellrohrs oder dergleichen. Das dargestellte Endstück des Schwanenhalses weist eine drehbare Schraubhülse 23 auf, die mit ihrem Innengewinde auf das Außengewinde der Aufnahmehülse 16 des Saugfußsockels aufschraubbar ist. Auf dem aus der Schraubhülse 23 herausragenden Ende des Kerndrahts 21 sitzt ein konisches polygones Keilzwischenstück 24, dessen Außenform komplementär zur Innenform der Aufnahmehülse 16 ist.

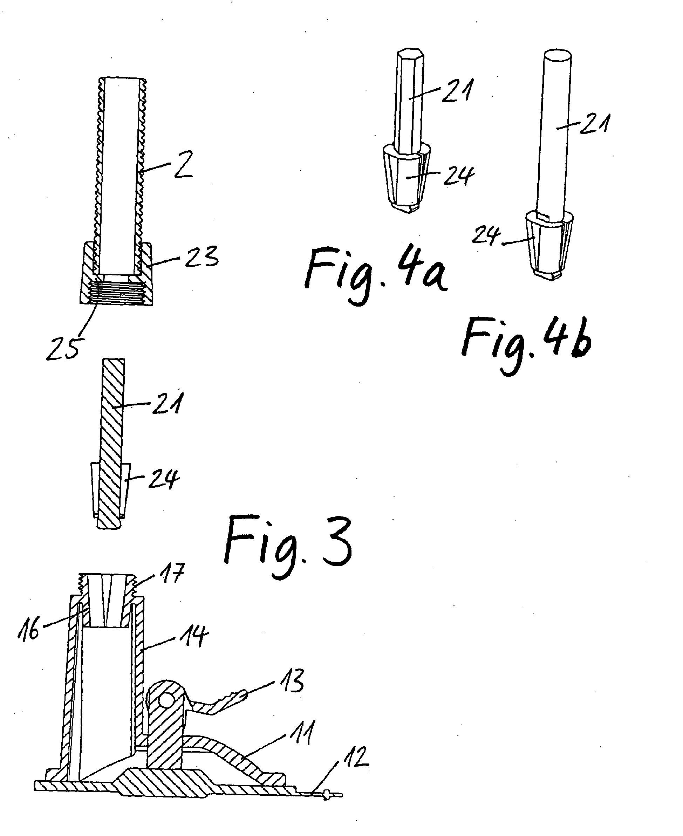

Figur 3 zeigt die Anordnung im Schnitt, wobei diese insgesamt auseinander gezogen dargestellt ist, d. h. auch der Schwanenhals ist auseinandergezogen dargestellt.

Die Figuren 4 a und 4b zeigen den Kerndraht 21 allein, und zwar in Figur 4a in der Ausführungsform mit Sechskantquerschnitt und in Figur 4b in der Ausführungsform mit Rundquerschnitt, jeweils mit aufgesetztem Keilzwischenstück24 . Das Keilzwischenstück hat jeweils eine polygonal profilierte, aber nicht konische Innenfläche, die mit einer entweder schon vorhandenen (bei der Ausführungsform nach Figur 4a) oder angeformten (bei der Ausführungsform nach 4b, dort in Gestalt einer Abflachung) polygonalen Außenfläche des Kerndrahts 21 zusammenwirkt.

Das Keilzwischenstück 24 kann, wie auch aus den Figuren 4a und 4b recht gut ersichtlich ist, als geschlitzter Hülsenkörper ausgebildet sein, so daß er auf den Kerndraht 21 auf steckbar oder aufklipsbar ist und außerdem in sich radial federn kann, so daß er sich spielfrei an den Kerndraht 21 anlegen kann. Durch geringfügiges Verformen des Drahtendes kann eine Formschlussverbindung zwischen dem Keilzwischenstück 24 und dem Kerndrahtende hergestellt werden, so daß das Keilzwischenstück zumindest nicht ohne Kraftaufwand vom Kerndraht lösbar ist.

Wie aus Figur 3 leicht ersichtlich ist, wirkt ein innerer Radialflansch 25 der Schraubhülse 23 mit der rückwärtigen Stirnfläche 26 des dickeren Endes des Keilzwischenstücks 24 zusammen. Wenn nun zum Verbinden des Schwanenhalses mit dem Saugfußsockel das Endstück des Kerndrahts 21 mit dem darauf sitzenden Keilzwischenstück 24 in die Aufnahmehülse 16 eingesteckt und die Schraubhülse 23 auf das Außengewinde der Aufnahmehülse 16 aufgeschraubt wird, wird die Schraubbewegung der Schraubhülse 23 in eine Axialbewegung der Schraubhülse übersetzt, wodurch über den Innenringflansch 25 der Schraubhülse 23 das Kerndrahtende mit dem Keilzwischenstück 24 axial in die Aufnahmehülse 16 hineingepresst wird. Weil das Innere der Aufnahmehülse 16 komplementär konisch zum äußeren des Keilzwischenstücks 24 ist, wird das axiale Hineindrücken des Keilzwischenstücks 24 in die Aufnahmehülse in eine radiale Spannbewegung umgesetzt. Dabei erfolgt ein festes radiales Verspannen der Außenfläche des Keilzwischenstücks 24 mit der Innenfläche der Aufnahmehülse 16 und ein ebensolches straffes Verspannen der Innenfläche des Keilzwischenstücks mit der Außenfläche des Kerndrahts 21. Da das Keilzwischenstück 24 außen und innen jeweils polygonal profiliert ist und die Innenwand der Aufnahmehülse 16 komplementär zur Außenfläche des Keilzwischenstücks polygonal profiliert und die Außenfläche des Kerndrahts 21 komplementär zum Inneren des Keilzwischenstücks profiliert ist, entsteht auf diese Weise eine straffe formschlüssige drehfeste Verspannung, ohne daß es einer Verklebung bedarf.

Mit der erfindungsgemäßen Konstruktion läßt sich also eine hochwirksame drehfeste, aber lösbare Verbindung zwischen einem Anschlussstück (Schwanenhals) und einem Funktionsteil (Saugfußsockel, Halteplatte oder dergleichen) herstellen. Andere Anwendungsmöglichkeiten sind nicht ausgeschlossen.

## Patentansprüche

1. Lösbare drehfeste mechanische Verbindung zwischen einem Funktionsteil (1) und einem Anschlussteil (2), wobei
a) das eine Teil (1) mit einer Aufnahmehülse (16) und das andere Teil (2) mit einem in dieAufnahmehülse einsteckbaren Einsteckelement (21) versehen ist,
b) am einen Teil (1) und am anderen Teil (2) miteinander zusammenwirkende Fixiermittel (17, 23) zum Fixieren des einen Teils am anderen Teil unter gleichzeitiger relativer Axialbewegung zwischen dem Einsteckelement (21) und der Aufnahmehülse (16) vorgesehen sind,
**dadurch gekennzeichnet, dass**
c) zwischen dem Einsteckelement (21) und der Aufnahmehülse (16) ein an einem dieser beiden Elemente fixiertes Keilzwischenstück (24) angeordnet ist,
d) das Keilzwischenstück (24) mit seinen Außenflächen mit polygonalen Innenflächen der Aufnahmehülse (16) und mit seinen Innenflächen mit polygonalen Außenflächen des Einsteckelements (21) zusammen wirkt, wobei die Flächen mindestens eines miteinander zusammenwirkenden Flächenpaars mit Bezug auf die Einsteckrichtung schwach geneigt verlaufen, und
e) das Keilzwischenstück (24) als geschlitzte Hülse ausgebildet ist.

2. Verbindung nach Anspruch 1, wobei das Keilzwischenstück (24) auf das Einsteckelement aufgesteckt ist.

3. Verbindung nach Anspruch 1 oder 2, wobei das Keilzwischenstück (24) sich in Einsteckrichtung verjüngt und mit seinen konvergierenden Außenflächen mit entsprechend konvergierenden Innenflächen der Einsteckhülse (16) zusammenwirkt.

4. Verbindung nach Anspruch 3, wobei das Keilzwischenstück (24) parallel zur Einsteckrichtung verlaufende Innenflächen aufweist, die mit ebenfalls parallel zur Einsteckrichtung verlaufenden Außenflächen des Einsteckelements (21) zusammenwirken.

5. Verbindung nach einem der Ansprüche 1 bis 4, wobei das Einsteckelement ein Metallstab ist und das Keilzwischenstück (24) und die Aufnahmehülse (16) aus Kunststoff bestehen.

6. Verbindung nach einem der Ansprüche 1 bis 5, wobei die Fixiermittel durch eine am einen Teil (2) angeordnete Schraubhülse (23) und ein am anderen Teil (1) angeordnetes Gegengewinde (17) gebildet sind.

7. Verbindung nach Anspruch 6, wobei die Schraubhülse (23) ein axial mit dem Keilzwischenstück (24) zusammenwirkendes und dieses beim Verschrauben der Schraubhülse (23) mit dem Gegengewinde (17) axial in Einsteckrichtung spannendes Mitnehmerelement (25) aufweist.

8. Verbindung nach einem der Ansprüche 1 bis 6, wobei das Anschlussteil (2) ein sogenannter Schwanenhals ist, dessen Einsteckelement durch das Ende des metallenen Kerndrahts (21) gebildet ist, und wobei das Funktionsteil (1) ein Befestigungssockel, ein Gerätehalter oder eine Montageplatte ist.

## Claims

1. Releasable, rotationally fixed, mechanical connection between a functional part (1) and a connecting part (2),
a) one part (1) being provided with a receiving sleeve (16) and the other part (2) being provided with an insertion element (21) which can be inserted into the receiving sleeve,
b) mutually interacting fixing means (17, 23) being provided on the one part (1) and on the other part (2) for fixing the one part to the other part with simultaneous relative axial movement between the insertion element (21) and the receiving sleeve (16),
**characterised in that**
c) there is arranged between the insertion element (21) and the receiving sleeve (16) an intermediate wedge piece (24) fixed to one of these two elements,
d) the intermediate wedge piece (24) interacting with its outer surfaces with polygonal inner surfaces of the receiving sleeve (16) and with its inner surfaces with polygonal outer surfaces of the insertion element (21), the surfaces of at least one mutually interacting surface pair extending at a slight inclination in relation to the direction of insertion, and
e) the intermediate wedge piece (24) being embodied as a slotted sleeve.

2. Connection according to claim 1, wherein the intermediate wedge piece (24) is attached to the insertion element.

3. Connection according to claim 1 or 2, wherein the intermediate wedge piece (24) tapers in the direction of insertion and interacts at its converging outer surfaces with correspondingly converging inner surfaces of the insertion sleeve (16).

4. Connection according to claim 3, wherein the intermediate wedge piece (24) has inner surfaces which extend parallel to the direction of insertion and interact with outer surfaces of the insertion element (21) that also extend parallel to the direction of insertion.

5. Connection according to one of claims 1 to 4, wherein the insertion element is a metal bar and the intermediate wedge piece (24) and the receiving sleeve (16) are made of plastics material.

6. Connection according to one of claims 1 to 5, wherein the fixing means are formed by a screwed sleeve (23) arranged on one part (2) and a mating thread (17) arranged on the other part (1).

7. Connection according to claim 6, wherein the screwed sleeve (23) has a driver element (25) which interacts axially with the intermediate wedge piece (24) and tensions said intermediate wedge piece axially in the direction of insertion during screwing of the screwed sleeve (23) to the mating thread (17).

8. Connection according to one of claims 1 to 6, wherein the connecting part (2) is what is known as a swan neck, the insertion element of which is formed by the end of the metallic core wire (21), and wherein the functional part (1) is a fastening base, an apparatus holder or a mounting plate.

## Revendications

1. Assemblage mécanique séparable bloqué en rotation entre une pièce fonctionnelle (1) et une pièce de raccordement (2), dans lequel
a) une pièce (1) est munie d'une douille de logement (16) et l'autre pièce (2) d'un élément emboîtable (21) pouvant s'emboîter dans la douille de logement,
b) des moyens de fixation (17, 23) sur l'une pièce (1) et sur l'autre pièce (2), coopérant entre eux, sont prévus pour fixer une pièce sur l'autre pièce avec mouvement axial relatif simultané entre l'élément emboîtable (21) et la douille de logement (16),
**caractérisé en ce que**
c) une pièce intermédiaire cunéiforme (24) fixée sur l'un de ces deux éléments est disposée entre l'élément emboîtable (21) et la douille de logement (16),
d) la pièce intermédiaire cunéiforme (24) coopère, par ses surfaces extérieures, avec des surfaces intérieures polygonales de la douille de logement (16) et, par ses surfaces intérieures, avec des surfaces extérieures polygonales de l'élément emboîtable (21), les surfaces d'au moins un couple de surfaces coopérant entre elles s'étendant avec une faible inclinaison par rapport à la direction d'emboîtement, et
e) la pièce intermédiaire cunéiforme (24) est réalisée sous la forme de douille fendue.

2. Assemblage selon la revendication 1, dans lequel la pièce intermédiaire cunéiforme (24) est emmanchée sur l'élément emboîtable.

3. Assemblage selon la revendication 1 ou 2, dans lequel la pièce intermédiaire cunéiforme (24) se rétrécit dans la direction d'emboîtement et coopère par ses surfaces extérieures convergentes avec des surfaces intérieures de la douille de logement (16) convergeant de manière correspondante.

4. Assemblage selon la revendication 3, dans lequel la pièce intermédiaire cunéiforme (24) présente des surfaces intérieures s'étendant parallèlement à la direction d'emboîtement, qui coopèrent avec des surfaces extérieures de l'élément emboîtable (21) s'étendant également parallèlement à la direction d'emboîtement.

5. Assemblage selon l'une des revendications 1 à 4, dans lequel l'élément emboîtable est une tige métallique et la pièce intermédiaire cunéiforme (24) ainsi que la douille de logement (16) sont réalisées en matière plastique.

6. Assemblage selon l'une des revendications 1 à 5, dans lequel les moyens de fixation sont formés par une douille filetée (23) disposée sur une pièce (2) et un filetage opposé (17) disposé sur l'autre pièce (1).

7. Assemblage selon la revendication 6, dans lequel la douille filetée (23) présente un élément d'entraînement (25) coopérant axialement avec la pièce intermédiaire cunéiforme (24) et serrant celle-ci axialement dans la direction d'emboîtement lors du vissage de la douille filetée (23) avec le filetage opposé (17).

8. Assemblage selon l'une des revendications 1 à 6, dans lequel la pièce de raccordement (2) est une pièce appelée col de cygne, dont l'élément emboîtable est formé par l'extrémité du fil central (21) métallique et la pièce fonctionnelle (1) est un socle de fixation, un support d'appareil ou une platine de montage.
